Europäisches Patentamt

European Patent Office

Office européen des brevets

(19)

(11) Veröffentlichungsnummer: **0 229 309**
**B1**

(12) **EUROPÄISCHE PATENTSCHRIFT**

(45) Veröffentlichungstag der Patentschrift: **04.04.90**

(51) Int. Cl.⁵: **B 23 B 31/02**

(21) Anmeldenummer: **86117091.8**

(22) Anmeldetag: **09.12.86**

(54) **Vorrichtung zum Innenspannen von weichem Dreibackenfutter bei Drehmaschinen.**

(30) Priorität: **18.12.85 DE 3544799**
**29.04.86 DE 3614501**

(43) Veröffentlichungstag der Anmeldung:
**22.07.87 Patentblatt 87/30**

(45) Bekanntmachung des Hinweises auf die
Patenterteilung:
**04.04.90 Patentblatt 90/14**

(84) Benannte Vertragsstaaten:
**CH FR GB IT LI SE**

(56) Entgegenhaltungen:
**DE-A-2 131 266**
**DE-A-3 205 225**
**US-A-3 104 474**

(73) Patentinhaber: **Mathes, Adam**
**Vogelsangstrasse 7**
**D-7403 Ammerbuch 4 (Reusten) (DE)**

(72) Erfinder: **Mathes, Adam**
**Vogelsangstrasse 7**
**D-7403 Ammerbuch 4 (Reusten) (DE)**

(74) Vertreter: **Otte, Peter, Dipl.-Ing.**
**Tiroler Strasse 15**
**D-7250 Leonberg (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 229 309 B1

## Beschreibung

### Stand der Technik

Die Erfindung geht aus von einer Vorrichtung nach dem Oberbegriff des Anspruchs 1. Bei einer bekannten Vorrichtung dieser Art (US-A-3 104 474) ist eine Spannplatte mit unregelmäßigem Umfangsverlauf vorgesehen, wobei je nach Anzahl der Spannbacken der Drehmaschine drei oder auch vier nach außen nasenartig abgebogene Vorsprünge gebildet sind, wobei längs der Vorsprungs-Randkanten jeder miteinander vergleichbare Punkt einen unterschiedlichen Abstand zum Spannplattenmittelpunkt aufweist.

Auf diese Weise ist es möglich, durch Einsetzen einer solchen Spannplatte mit unterschiedlicher Winkelposition in das Dreibackenfutter sicherzustellen, daß jeder gewünschte Spannpositionsabstand übergangsfrei von den Backen eingenommen werden kann, die dann unter Spannung auf das gewünschte Aufnahmeendmaß für einen späteren Drehvorgang ausgedreht werden können. Problematisch kann bei einer solchen einfachen plattenförmigen Spannvorrichtung allerdings der Umstand sein, daß infolge des schrägen Verlaufs der Spannplatten-Vorsprünge die an deren Außenkanten angreifenden Spannbacken abrutschen können oder sich verkanten.

Daher ist es bei solchen Vorrichtungen ferner auch bekannt (DE-A-2 131 266), die Spannscheibe über den Vorsprungsdurchmesser abgestuft auszubilden, so daß die einzelnen Backen jeweils eine eindeutige Auflage finden können. Dies führt allerdings wieder dazu, daß durch die Abstufungen keine gleitenden Übergänge möglich sind, so daß man, wie bisher allgemein bekannt, auch in diesem Fall mit einer Vielzahl von Einzelvorrichtungen arbeiten muß, z.B. auch in Form von runden, jeweils verschiedene Durchmesser aufweisenden Ringen oder Scheiben. Verwendet man man nämlich als Spannplatte jeweils eine aus einer Vielzahl solcher runden Scheiben mit einem vorgegebenen festen Durchmesser, dann ist es zwar möglich, die Backen innen auf ein hochgenaues Einspann-Endmaß auszudrehen, es ist, aber auch erforderlich, einen großen Vorrat solcher Scheiben für alle denkbaren Durchmesser vorrätig zu halten, damit nicht unter Umständen größere Materialmengen des zu bearbeitenden Dreibackenfutters beim Ausdrehen abgenommen werden müssen.

Grundsätzlich ergibt sich bei dem Ausdrehen weicher Backen eines Mehrbackenfutters bei Drehmaschinen das Problem erheblicher Totzeiten bei der Bearbeitung, da man entweder aus einer Vielzahl vorhandener Backen und entsprechenden Scheiben die passenden Teile zusammensuchen muß, oder bei nur einer Scheibe mit kontunuierlichen Randkantenübergängen möglicherweise die Einspannung nicht fest genug vorgenommen werden kann, um die Gefahr eines Abrutschens auszuschließen.

Der Erfindung liegt daher die Aufgabe zugrunde, eine Vorrichtung zum Innenspannen eines weichen Dreibackenfutters bei Drehmaschinen zu schaffen, die gleichermaßen einfach aufgebaut ist, auf Zwischenmaße im stetigen Übergang eingestellt werden kann und dabei einen großen vorgegebenen Spannmaßbereich überstreicht, so daß nur einige wenige Exemplare einer solchen Vorrichtung mit unterschiedlichen Abmessungen benötigt werden.

### Vorteile der Erfindung

Die Erfindung löst diese Aufgabe mit den kennzeichnenden Merkmalen des Anspruchs 1 und hat den Vorteil, daß durch die relative Verdrehbarkeit von zwei eine allgemeine Dreieckform aufweisenden Spannplatten zueinander gleichzeitig sichere Angriffspunkte für die Backen speziell eines Dreibackenfutters bei Drehmaschinen gebildet werden, wobei sich dann jede Backe zu einem Teil auf dem angrenzenden Randkantenbereich der einen Dreieck-Spannplatte und gleichzeitig auf dem angrenzenden Randkantenbereich der anderen Spannplatte abstützt. Durch Verdrehung der Dreiecksplatten zueinander läßt sich der jeweilige Abstützpunkt kontinuierlich vom Spannplattenmittelpunkt aus gesehen nach außen oder innen verlagern, wobei sich die jeweils minimalen und maximalen Abstände der Backen-Abstützpunkte aus den Dreieck-Innenkreisen bzw, Außenkreisen der vorzugsweise miteinander identischen Dreiecke ergeben.

Vorteilhaft ist ferner, daß die Verstellbarkeit der Abstandsbeziehungen im kontinuierlichen Übergang möglich ist, da die relative Verdrehung der beiden Spannplatten zueinander in beliebiger Weise kraftschlüssig oder formschlüssig in Zwischenpositionen zueinander arretiert werden kann.

Hierdurch ist es möglich, daß sich präzise definierte, jeweils im Durchmesser kontinuierlich veränderbar einstellbare Auflagebereiche für die Backen des Dreibakkenfutters ergeben; solche definierten Auflagebereiche als Zwischenrastpositionen ergeben sich dadurch, daß basierend auf der Grundkonzeption der Verwendung einer Dreieck-Spannplatte eine Relativverdrehung zwischen zwei zueinander in beliebig fein abgestuften Winkelpositionen verdrehbaren Dreieck-Spannplatten realisiert wird.

Demnach ist einer ersten Dreieck-Spannplatte auf der Basis eines gleichschenkligen Dreiecks eine zweite Dreieck-Spannplatte zugeordnet, die zu der ersten eine jeweils fixierbare oder aretierbare relative Verdrehposition einnehmen kann. Nach Einstellen der jeweils gewünschten Verdrehposition, wodurch sich gleichzeitig auch der jeweilige Durchmesser innerhalb jeweils vorgebener Durchmesserbereiche bei bestimmten Größenabmessungen eines solchen Spannplattensystems ergibt, werden die beiden mit ihrer relativen Winkelposition zueinander arretierten Dreieck-Spannplatten innerhalb der weichen Bakken des Dreibackenfutters eingesetzt und sichern für diese jetzt für jeden gewünschten Durchmesser vorgegebene Sitzspannpositionen.

Die relative Verdrehbarkeit mit anschließender Fixierung der beiden Dreieck-Spannplatten zueinander kann dadurch erzielt werden, daß eine erste Spannplatte eine Außen-Stirnverzahnung zentral, beispielsweise mittels eines vorspringenden Achsstummels bildet, auf welcher Verzahnung dann die zweite Dreieck-Spannplatte mit einer eine Innenverzahnung aufweisenden Bohrung in beliebigen Winkelpositionen aufgesetzt und arretiert werden kann, vorzugsweise durch Anziehen einer geeigneten Spannschraube.

Zeichnung

Ausführungsbeispiele der Erfindung werden im folgenden anhand der Zeichnung näher erläutert. Dabei zeigt:

Fig. 1 eine Ausführungsform der Erfindung in schematisierter Draufsicht mit zwei relativ zueinander verdrehbaren Dreieck-Spannplatten,

Fig. 2 die beiden relativ zueinander verdrehbaren Spannplatten in einer Schnittdarstellung längs der zentralen Mittellinie, und

Fig. 3 ein Zahnradelement im Schnitt, welches an einer ersten Dreieck-Spannplatte stationär befestigt ist und durch wechselnden Eingriff mit einem Innenzahnrad einer zweiten Spannplatte deren relative Verdrehposition zur ersten Spannplatte formschlüssig sichert.

Beschreibung der Ausführungsbeispiele Entsprechend den Fig, 1, 2 und 3 sind zur Erzielung einer eindeutigen und sicheren Positionierung und Anlage der Backen zwei relativ zueinander verdrehbare und jeweils wieder fixierbare, hierdurch ein Spannplattensystem 50 bildende Dreieck-Spannplatten 51a, 51b vorgesehen, die bei vorzugsweise identischen Außenabmessungen um ihr gemeinsames Zentrum relativ zueinander verdrehbar, jedoch miteinander verbunden, angeordnet sind.

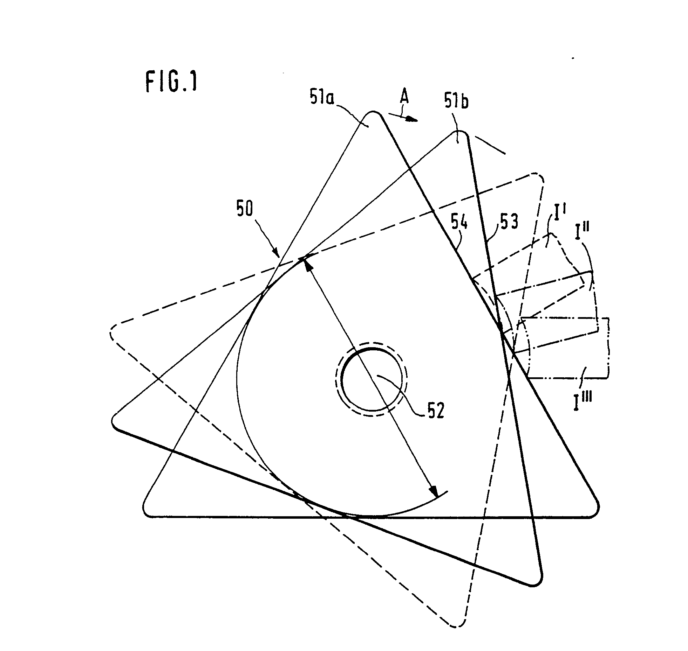

Hierdurch wird auch sofort die weiterführende Lösung durch dieses Ausführungsbeispiel erkennbar, welches die Darstellung der Fig. 1 zeigt, ohne zunächst genauer auf die jeweiligen Verbindungs- und/oder Arretierungsmöglichkeiten zwischen den beiden Dreieck-Spannplatten 51a, 51b einzugehen.

Um sich die Wirkung der Erfindung vorstellen zu können, sei davon ausgegangen, daß die beiden Dreieck-Spannplatten 51a, 51b zunächst bündig und deckend übereinanderliegen, Dann erkennt man, daß jeweils ein minimaler innerer und ein maximaler äußerer Spanndurchmesser für die Backen des Dreibackenfutters einer Drehmaschine gegeben ist, und zwar einmal durch Anlage mittig an den Seitenflächen und zum anderen an den jeweiligen Spitzen des Dreiecks, Verdreht man jetzt beispielsweise die eine Dreieck-Spannplatte 51b relativ zur ersten Dreieck-Spannplatte 51a um ihr gemeinsames Zentrum 52 beispielsweise in Richtung des Pfeils A, dann ergibt sich eine erste, neue Verdrehposition als relative Winkelposition der beiden Spannplatten 51a, 51b zueinander, die durch die dick durchgezogene Linie, für die Spannplatte 51b kenntlich gemacht ist, Man erkennt, daß in dieser neuen Winkelposition jede der Dreieck-Seitenflächen zur ursprünglichen Position und zu der von der ersten Spannplatte 51a beibehaltenen Position schräg zu liegen kommt d.h., daß die Seitenkante 53 hochdrückt, und zwar mit Bezug auf die beibehaltene Position der entsprechenden Seitenkante 54 der ersten Spannplatte 51a, so daß notwendigerweise eine lediglich einmal dargestellte Backe des Dreibackenfutters aus der Grundposition I' mit zunehmender Winkelverdrehung in beliebige andere Positionen I'' und I''' auf jeweils grössere Durchmesser sozusagen hochgedrückt wird, Jede beliebige relative Winkelposition der beiden Spannscheiben 51a und 51b zueinander entspricht daher einem unterschiedlichen, von den Backen I, II und III einzunehmenden Innendurchmesser, wobei sich noch der Vorteil ergibt, daß die Positionierung der Backen in ihrer Auflage an die beiden Spannscheiben 51a, 51b in jeder relativen Winkelposition fest und sicher vorgegeben ist, denn es sind jeweils immer drei Backen I, II und III vorhanden, die sich dann jeweils in ihrer Position so einstellen, daß sie beidseitig gleichmäßig an jeder der Spannplatten 51a, 51b, im gleichen Abstand am mit der Winkelverdrehung sich verschiebenden imaginären Schnittpunkt der Seitenkanten anliegen.

Man erkennt auch, daß bei zunehmender Winkelverdrehung der von den Backen einzunehmenden Durchmesser bis auf den Außenkreisdurchmesser der gleichschenkligen Dreiecke ansteigt, wobei es im übrigen und (selbstverständlich) auch möglich ist, von einem größeren Durchmesser auf den kleinsten Durchmesser, also in umgekehrter Richtung zu verfahren, In diesem Fall wäre allerdings von einer Öffnungsposition der jeweiligen Dreieckspitzen und einem entsprechend relativen Verdrehwinkel auszugehen, bei welcher das Dreibackenfutter zwischen die geöffneten Spitzen in jedem Eckbereich der Dreieck-Spannplatten hineinpaßt, wobei dann mit allmählich zunehmendem Öffnungswinkel der Innendurchmesser sich zunehmend verkleinert.

In der Darstellung der Fig, 1 sind die jeweiligen Relativpositionen I', I'' und I''' der lediglich dargestellten einen Backe des Dreibackenfutters gestrichelt, strichpunktiert und gestrichelt mit jeweils zwei Punkten gezeigt, wobei die zweite Relativposition der Spannplatte 51b zur Spannplatte 51a ebenfalls gestrichelt dargestellt ist.

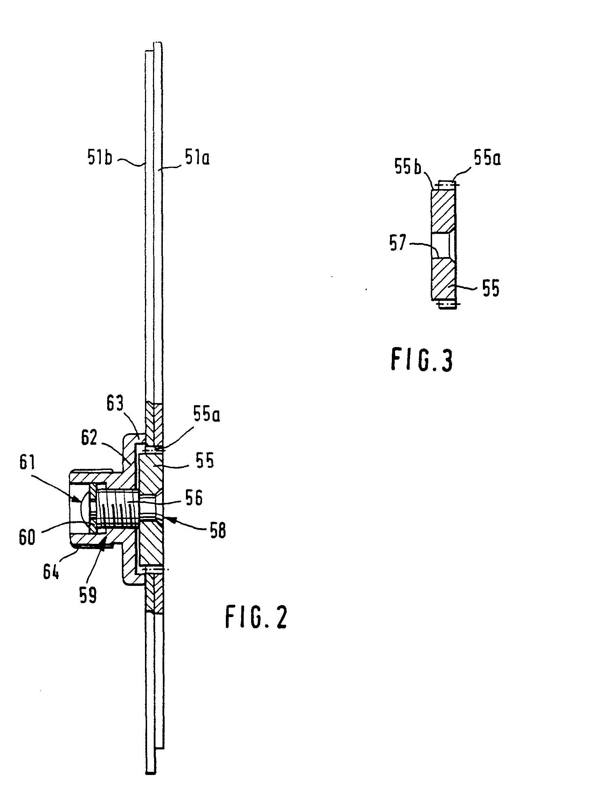

An sich kann die relative Verdrehbarkeit und Fixierbarkeit der beiden Spannplatten 51a, 51b zueinander in durchaus beliebiger Weise realisiert werden, beispielsweise durch Anordnen auf einer gemeinsamen Achse und Festspannen in der jeweiligen Winkelposition durch kraftschlüssiges Anziehen beispielsweise einer Spannschraube; bevorzugt wird jedoch eine formschlüssige Arretiermöglichkeit, wobei das bevorzugte Ausführungsbeispiel, welches in den Fig. 2 und 3 dargestellt ist, wiederum darin besteht, daß stationär mit einer ersten Dreieck-Spannplatte, beispielsweise 51a, verbunden ein Zahnradelement 55 vorgesehen ist, welches einen zentralen Nabenbereich bildet mit einer äußeren Stirnverzahnung 55a, auf die dann die zweite Dreieck-Spannplatte

51b mit einer entsprechend kämmenden Innenverzahnung aufgesetzt wird, jeweils durch axiales Abziehen nach vorn, also in Richtung weg von der ersten Dreieck-Spannplatte 51a läßt sich die Verzahnung lösen und nach Verdrehen in eine gewünschte relative Winkelposition durch Andrücken der zweiten Dreieck-Spannplatte 51b wieder der Eingriff der beiden Verzahnungen herstellen. Auf diese Weise ergeben sich fest vorgegebene Winkelpositionen, wobei die Auflösung, also die Feinheit der relativen Winkelverstellbewegung der beiden Spannplatten zueinander eine Frage der Anzahl der das Außenbzw. Innengewinde bildenden Zähne ist; je feiner also die Zähne, umso feinabgestufter die jeweiligen, aufeinanderfolgenden Winkelrelativpositionen, die die beiden Dreieck-Spannplatten 51a, 51b zueinander einnehmen können.

Bei der praktischen Herstellung kann so vorgegangen werden, daß das Zahnradelement 55 separat hergestellt wird und eine Form aufweist, wie in Fig. 3 gezeigt, d.h., es ist axial angrenzend zur Außenverzahnung 55' noch ein Absatz 55b gebildet, der sicherstellt, daß beim Abziehen der zweiten Dreieck-Spannplatte 51b, die auf dem Zahnradelement 55 sitzt, diese zweite Spannplatte 51b nicht völlig radial verrutscht, sondern selbst und mit ihrer Innenverzahnung auf die Außenverzahnung 55a ausgerichtet gehalten bleibt, so daß man lediglich noch die Verdrehbewegung durchzuführen braucht und, anschließend den gewünschten Verdrehwinkel durch axiales Aufschieben auf die Verzahnung sichert.

Damit die beiden Spannplatten 51a, 51b in dieser durch die Verzahnung gesicherten formschlüssigen Relativposition zueinander verbleiben, ist zur Sicherung ein kurzer Achsstift 56 vorgesehen, der in eine Bohrung 57 des Zahnradelements 55 bzw. in eine entsprechende Bohrung der ersten Spannplatte 51a eingesetzt und in dieser befestigt ist, beispielsweise durch Verschweißen, wie bei 58 angedeutet.

Auf ein Außengewinde dieses Achsstiftes 56 ist eine in besonderer Weise geformte Arretiermutter 59 aufgeschraubt, wobei sie gegen eine vollständige Abnahme, also ein vollständiges Abschrauben vom Achsstift 56 durch einen mit dem Achsstift 56 verbundenen Haltering 60 gesichert ist. Diese Verbindung kann durch Vernieten des Achsstiftes 56 im Kopfbereich, wie bei 61 angedeutet, hergestellt werden.

Die Form der Arretier- oder Feststellmutter 59 ist so, daß sie sich in Richtung auf die in ihrem jeweiligen Verzahnungseingriff zu fixierende Spannplatte 51b tassenartig erweitert, also in einen nach außen sich vergrößernden Ringbereich 62 übergeht, der seinerseits in einen abgewinkelten Druckringsteg 63 übergeht, der dann die Spannplatte 51b in ihrer jeweiligen Relativposition zur Spannplatte 51a sichert. Die Arretiermutter 59 kann bei 64 noch eine Rändelung aufweisen, so daß sie sich gut von Hand lösen und festziehen läßt. Dabei sind die jeweiligen relativen Abstände im Bereich der Arretiermutter 59, beispielsweise also die Möglichkeit des Abschraubens der Arretiermutter 59 bis zur Anlage an den Sicherungsring 60 so getroffen, daß beim axialen Abziehen der Spannplatte 51b von der Verzahnung die Spannplatte zwar von dieser freikommt, jedoch nicht von der dann tragenden Ringabschulterung 55b des Zahnradelements 55 weiter abrutschen kann.

Wird das Zahnradelement 55 separat hergestellt, dann kann eine Befestigung an der ersten Spannplatte 51a auch so erfolgen, daß auch in dieser eine Innenverzahnung angeordnet wird, in die die Außenverzahnung 55a des Zahnradelements 55 dann etwa zur Hälfte eingreift, worauf in entsprechenden Bereichen die Verbindung durch Punktschweißen, Verstemmen o,dgl. hergestellt wird. Die andere Hälfte der freigebliebenen Außenverzahnung 55a des Zahnradelements 55 dient dann zur Aufnahme der Innenverzahnung der zweiten Spannplatte 51b.

Es versteht sich, daß, wie weiter vorn schon erwähnt, hier beliebige andere Arretiermechanismen für die relative Winkelverdrehung er beiden Platten zueinander moglich sind; beispielsweise kann eine der Spannplatten einer Kreisstruktur oder einer spiraligen Form folgend Bohrungen aufweisen, in die von der anderen Spannplatte ausgehende Stifte in jeder gewünschten relativen Winkelposition eingreifen, wodurch sich ebenfalls eine formschlüssige Fixierung der beiden Spannplatten zueinander ergibt, Es ist auch möglich, an beiden Spannplatten aufeinander zugerichtete, ringförmige Verzahnungen anzubringen o,dgl.

Zum Einsetzen des aus den beiden Spannplatten bestehenden Spannplattensystems kann ein geeignetes Hilfswerkzeug in Form eines Schlüssels o.dgl. vorgesehen sein, welches in beliebiger Weise eine lösbare Greifposition mit den miteinander verbundenen Spannplatten 51a, 51b einnimmt. Eine einfachste Ausführungsform kann darin bestehen, daß dieses Hilfswerkzeug an seinem vorderen Ende ein Gewinde aufweist, mit welchem es in ein zentrales Gewinde im Nabenbereich 52 des Spannplattensystems eingeschraubt wird; es ist aber auch möglich, schlüssellochförmige Führungen vorzusehen, so daß das Hilfswerkzeug mit Vorsprüngen in Öffnungen oder Aufnahmelöcher des Spannplattensystems eingreift und durch Verdrehung gesichert wird.

**Patentansprüche**

1. Vorrichtung zum Innenspannen eines weichen Dreibackenfutters bei Drehmaschinen zur Ermöglichung eines sich daran anschließenden Ausdrehens der drei Backen auf hochgenaues Einspann-Endmaß, wobei eine Spannplatte mit sich zu ihrem Mittelpunkt ändernden Abständen ihrer Außenkanten mit je nach gewünschtem Ausmaß variierender Winkelposition in das weiche Dreibackenfutter so eingesetzt ist, daß die Backen an jeder beliebigen Zwischenposition der Spannplatte an deren Außenkanten unter Spannung angreifen, dadurch gekennzeichnet, daß zwei zueinander in relative Verdrehpositionen verdrehbare Spannplatten (51a, 51b) mit der Außenform jeweils eines gleichschenkligen Dreiecks vorgesehen sind, wobei sich bei jeder relativen Winkelposition der beiden Spannplatten (51a, 51b) zueinander von den dann jeweils zueinander verkantet stehenden Randkanten beider Spannplatten gemeinsame Auflagepositionen für die Backen (I', I'', I''') des Dreibackenfutters ergeben.

2. Vorrichtung nach Anspruch 1, dadurch gekennzeichnet, daß die beiden Dreieck-Spannplatten (51a, 51b) identische Außenmaße aufweisen und in ihren jeweils beliebig wählbaren relativen Winkelpositionen zueinander formschlüssig arretierbar sind.

3. Vorrichtung nach Anspruch 1 oder 2, dadurch gekennzeichnet, daß die beiden Dreieck-Spannplatten (51a, 51b) durch einen zentralen Achsstift (56) miteinander verbunden sind.

4. Vorrichtung nach einem der Ansprüche 1 bis 3, dadurch gekennzeichnet, daß im Bereich des beide Spannplatten miteinander verbindenden Achsstiftes ein Zahnradelement (55) angeordnet ist, welches der einen Dreieck-Spannplatte (51a) stationär und der anderen Dreieck-Spannplatte (51b) lösbar zugeordnet ist.

5. Vorrichtung nach einem der Ansprüche 1 bis 4, dadurch gekennzeichnet, daß das Zahnradelement (55) eine Ringabschulterung (55b) aufweist, die beim Abziehen der zweiten Spannplatte (51b) von seiner Außenverzahnung eine Auflage zur ausgerichtet gehaltenen Verdrehung, der Spannplatte bildet.

6. Vorrichtung nach einem der Ansprüche 1 bis 5, dadurch gekennzeichnet, daß das Zahnradelement (55) zur stationären Verbindung mit der ersten Spannplatte (51a) in eine Innenverzahnung an dieser eingesetzt und durch Schweißen fest verbunden ist und daß zur Sicherung der zweiten Spannplatte (51b) mit ihrer Innenverzahnung auf den verbleibenden Zahnradkranz des Zahnradelements (55) eine Arretiermutter (59) vorgesehen ist.

7. Vorrichtung nach Anspruch 6, dadurch gekennzeichnet, daß die Arretiermutter (59) auf einem Außengewinde des Achsstiftes (56) verdrehbar angeordnet, jedoch axial gesichert ist und mit einem das Zahnradelement (55) übergreifenden Ringflansch (62, 63) die zweite Spannplatte (51b) in ihrer jeweiligen, durch den relativen Verzahnungseingriff bestimmten Rastposition zur ersten Spannplatte (51a) sichert.

**Revendications**

1. Dispositif de fixation intérieure d'un mandrin de serrage mou pour tour, pour la réalisation d'un alésage consécutif des trois mâchoires sur une mesure finale de fixation de haute précision, dans lequel une plaque de fixation est insérée dans le mandrin de serrage mou, les distances de ses bords extérieurs par rapport à son centre de gravité étant variables avec la position angulaire qui varie selon la dimension extérieure désirée, afin que les mâchoires dans chaque position intermédiaire quelconque de la plaque de fixation soient en contact de fixation avec les bords extérieurs de cette plaque de fixation, caractérisé en ce que deux plaques (51a, 51b) de fixation pouvant être décalées en position angulaire relative l'une par rapport à l'autre sont prévues chaque fois sous la forme extérieure d'un triangle isocèle, grâce à quoi, pour chaque position angulaire relative des deux plaques (51a, 51b) de fixation l'une par rapport à l'autre, des positions communes de charge pour les mâchoires (I', I'', I''') du mandrin résultent des arêtes de bord des deux plaques de fixation situées penchées chaque fois l'une par rapport à l'autre.

2. Dispositif selon la revendication 1, caractérisé en ce que les deux plaques (51a, 51b) de fixation triangulaires présentent des dimensions extérieures identiques, et peuvent être convenablement arrêtées chaque fois dans leurs positions angulaires relatives l'une par rapport à l'autre et de choix arbitraire.

3. Dispositif selon les revendications 1 ou 2, caractérisé en ce que les deux plaques (51a, 51b) de fixation triangulaires sont liées l'une à l'autre par un élément d'axe central (56).

4. Dispositif selon l'une quelconque des revendications 1 à 3, caractérisé en ce que, dans la zone de l'élément d'axe liant les deux plaques de fixation l'une à l'autre, un élément de roue dentée (55) est disposé, lequel est agencé de façon fixe avec l'une des plaques (51a) de fixation triangulaires, et détachable de l'autre plaque (51b) de fixation.

5. Dispositif selon l'une quelconque des revendications 1 à 4, caractérisé en ce que l'élément de roue dentée (55) présente un épaulement annulaire (55b) qui, lors de l'enlèvement de la seconde plaque (51b) de fixation de sa denture extérieure, forme une assise pour tourner la plaque de fixation dont la direction a été conservée.

6. Dispositif selon l'une quelconque des revendications 1 à 5, caractérisé en ce que l'élément de roue dentée (55) est inséré en liaison fixe avec la première plaque (51a) de fixation dans une denture intérieure à cette plaque, la liaison étant stabilisée par soudage, et que pour assurer la seconde plaque (51b) de fixation avec sa denture intérieure sur la couronne dentée restante de l'élément de roue dentée (55), une pièce femelle (59) d'arrêt est prévue.

7. Dispositif selon la revendication 6, caractérisé en ce que la pièce femelle (59) d'arrêt est disposée de façon à pouvoir tourner sur un filetage extérieur de l'élément d'axe (56), mais est cependant assumée axialement, et assure la seconde plaque (51b) de fixation par une bride annulaire (62, 63) dépassant l'élément de roue dentée (55), la seconde plaque (51b) de fixation étant assurée dans sa position respective de repos définie par la prise relative d'engrenage par rapport à la première plaque (51a) de fixation.

**Claims**

1. A device for internal chucking of a soft concentric chuck in lathes to permit the three jaws to be bored into a highly accurate final clamping position, a clamping plate, whose outer edges are capable of changing their distance from its central point, being so inserted in the soft concentric chuck at an angular position which may vary according to the desired degree, that the jaws at any intermediate position of the clamping plate grip the outer edges thereof under pressure, characterised in that two clamping plates (51a, 51b) ere provided, which are capable of being rotated to any rotational position relative to one another, each having the external form of an equilateral triangle, and each relative angular position of the two clamping plates (51a, 51b) relative to one another forms from the edges of the two clamping plates, which are in this case tilted towards one another, common bearing positions for the jaws (l', l'', l''') of the concentric chuck.

2. A device according to claim 1, characterised in that the two triangular clamping plates (61a, 51b) have identical dimensions and can be stopped by positive locking in their respective selectable angular positions relative to one another.

3. A device according to claims 1 or 2, characterised in that the two triangular clamping plates (51a, 51b) are connected together by a central axial pin (56).

4. A device according to one of claims 1 to 3, characterised in that a gearwheel element (55), which is stationarily associated with one triangular clamping plate (51a) and detachably associated with the other clamping plate (51b) is disposed in the region of the axial pin connecting the two clamping plates together.

5. A device according to one of claims 1 to 4, characterised in that the gearwheel element (55) has an annular shoulder (55b) which, when the second clamping plate (51b) is being pulled away from its outer toothing, forms a support for the rotation, which is held in alignment, of the clamping plate.

6. A device according to one of claims 1 to 5, characterised in that the gearwheel element (55) to be stationarily connected to the first clamping plate (51a) is inserted in an internal toothing on the latter and is joined rigidly by welding, and in that a stop nut (59) is provided to fix the second clamping plate (51b) by its inner toothing on the remaining gearwheel of the gearwheel element (55).

7. A device according to claim 6, characterised in that the stop nut (59) is rotatably mounted on an outer thread of the axial pin (56), but is fixed axially and fixes the second clamping plate (51b), in its respective engaging position determined by the relative meshing of the toothing, to the first clamping plate (51a) by means of an annular flange (62, 63) which covers the gearwheel element (55).

FIG.1

FIG.3

FIG. 2